# EUROPEAN PATENT SPECIFICATION

(11) **EP 0 760 261 B1**
(45) Date of publication and mention of the grant of the patent: **16.07.2003**
(21) Application number: 95500115.1
(22) Date of filing: 31.07.1995
(51) Int. Cl.: B05D 1/12, B05D 7/14, F16B 35/00, B05B 15/04

(54) **Device for introduction of a plastic coating on externally-threaded rods and use of the device**
Vorrichtung zum Aufbringen einer Kunststoffbeschichtung auf Stäbe mit Aussengewinde und Verwendung der Vorrichtung
Dispositif pour depôt de revêtement plastique sur des tiges filetées et utilisation du dispositif

(43) Date of publication of application: 05.03.1997
(73) Proprietor: GALOL, S.A., 46850 Olleria (Valencia) (ES)
(72) Inventor: Reyes Fernandez, Juan, 46850 Olleria, Valencia (ES)
(74) Representative: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(56) References cited:
- EP-A- 0 640 402
- WO-A-91/05613
- WO-A-91/05614
- DE-A- 4 239 496
- US-A- 4 656 051

## Description

This invention refers to a device for applying a plastic coating on threaded objects according to the preamble of claim 1. Such a device is known from EP-A-0 640 402.

Presently, there is a series of problems in the processes of impregnation of plastic powder on externally threaded bodies like screws.

One of the main drawbacks is to attain that the impregnated thread zone is exactly the wanted one.

This problem stems mainly from the electrostatic charge to which the threaded metal rod is subjected in its moving.

This causes several problems like the irregularity of the quantity and disposition of the powder preventing to guarantee its utility since not all the threaded pieces obtain the same finishing.

A process to avoid this, partially, is the application of a primer before heating the rod which constitutes a major cost of the system because of the need to utilize a primer system, the primer itself and the most accurate powder injection possible.

Usually, for hygiene and quality, the self-locking plastic material coating has to be impregnated on a specific part of the screw in order to guarantee the self-locking and its uniformity. This means that if there is an electrostatic charge on the screw, even the smallest one, a cloud is created around the screw so that when the plastic powder is blown on a zone of the screw it can be repelled towards other unwanted zones causing non-uniform products and therefore lacking in guarantee.

Another drawback is, on the one hand, the harmful environment in the priming point or zone and, on the other hand, the loss of that material in suspension. If this harmful environment extends, persons circulating in the surrounding area risk to breathe it and to be affected by intoxication and respiratory problems or are obliged to wear protection means against these agents. Besides this important problem, there is also the loss of all this material which makes a constant replacement in the process necessary and constitutes a major cost factor.

EP-A-0 640 402 discloses a device for applying plastic powder to objects. Through a chamber containing plastic powder, an air stream is directed. The air stream creates underpressure and drags the powder along into a transfer conduit to a nozzle. The powder exits the nozzle into a coating chamber. The part of the powder which does not stick on an object to coat, is removed by a vacuum collector in order to be reused. However, the problem of electrostatic charge on the objects and the collected plastic powder has not been conceived and consequently, not addressed.

On the other hand, injectors are used as applicator device of the plastic powder on the rods. These injectors are of delicate maintenance, since its ducts are very thin and easily obstructable, and they are expensive.

Nowadays another difficulty is to keep the material in a powder condition during the whole process since the formation of powder lumps or clusters hampers the process causing a malformation of the coating applied on the threaded rod and irregularity of the coatings.

Hence, one object of the present invention is to propose a device for avoiding the mentioned problems of the prior art.

Another object of this invention is to improve the supply of the material with minimum cost and in a simple and practical way.

Such a device is defined by claim 1. The further claims define preferred embodiments and uses thereof.

First, in the feeding of threaded rods, this device has some antielectrostatic conveyor belts in such a way that they eliminate the accumulated charge in these rods.

The plastic material powder, not impregnated on the screw, is totally collected by a directed laminar fluid-suction system that allows a cleaner environment. This powder, suspended in the air, is recirculated for its subsequent use, reducing the waste to practically nothing.

By means of a series of deposits, filters, mechanisms like motors, screws, endless screws, etc., we constantly keep the powder in said powder condition during the whole circuit, in such a way that there is no creation of lumps or accumulations in any place that could be a danger for the coating uniformity in the thread of the threaded rod.

On the other hand, the powder blowing system is simple because it is based on allowing a constant quantity of air to pass into a nozzle. This air creates an underpressure in a deposit of powder attracting it towards the hot surface of the threaded rod.

This device is simple, without complexity and avoids a great maintenance of the process.

So, the device is practical, simple and flexible because it is possible to achieve a large range of applications of these plastic materials on the rods by varying the speed of the conveyor belts, the temperature of the threaded rod, the blowed air volume and the disposition and number of the blowers.

It will be easier to understand this invention with the help of the following drawings:
Figure 1.- Schematical illustration of the device;
Figure 2.- Schematic section of a blower.

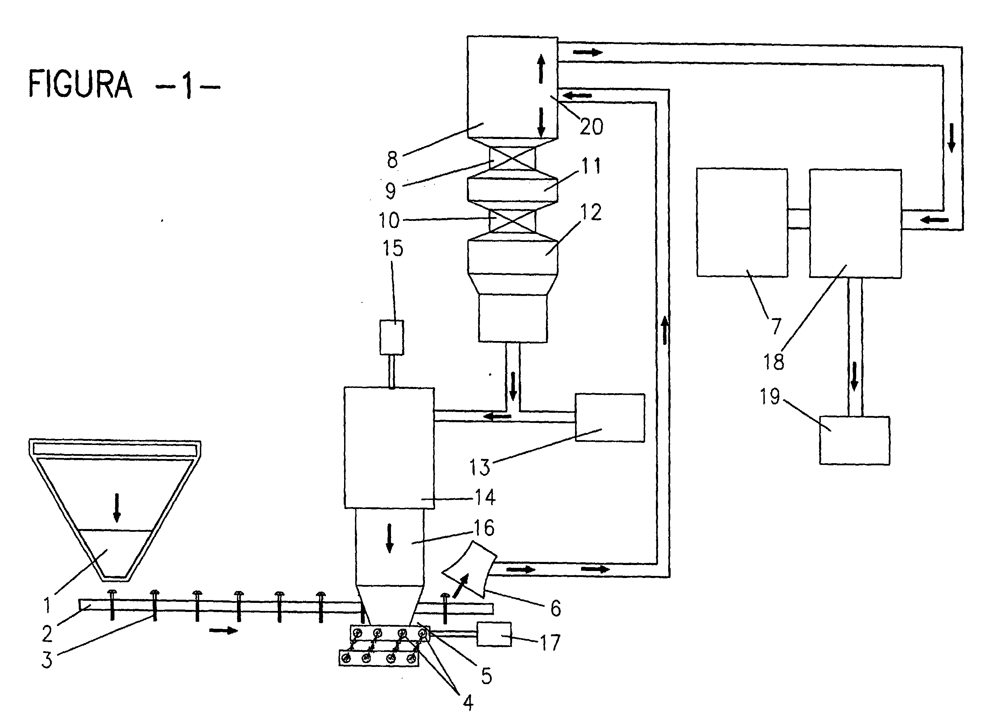

In Fig. 1, we can see different parts of the device. We start from a hopper 1, the feeding position of threaded elements like screws. From here begins a conveyor belt 2 that carries the screws 3 up to the blowing point. Along this short path, the screws 3 are heated by any known method.

On the one hand, in the blowing point, we can see an air flow from the blowers 4 to the nozzles 21 and, on the other hand, a plastic powder flow, both mixing in a kind of chamber 5. The blowers 4 and nozzles 21 are fed by any known system like a compressor, etc., (not disclosed in the schema).

Just in the blowing point 5 and on the other side of the conveyor belt 2, there is a collector 6 that gives access to a plastic powder recycling circuit.

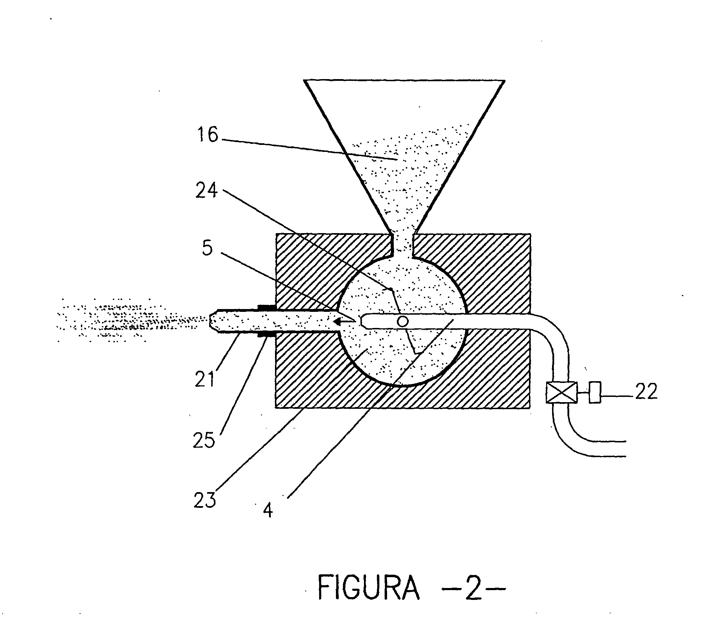

By means of a canal system, the excess powder is aspirated by this collector 6 by means of a powerful suction device 7. Part of the aspirated powder falls into a deposit 8, passes to other containers 11 and 12 through some valves 9 and 10. From the latter one, it passes to another container 14 by means of a screw or endless screw 13. In this container 14, we keep a minimum movement by means of a motor 15 with blades or any known method for this object. From this container 14, it passes to a smaller deposit 16 (Fig. 2) where the plastic powder is kept in movement by means of a mechanism 17 and is subsequently aspirated in the chamber 5 from where it is blown towards the previously heated screws 3.

On the other hand, the particles that, because of the cyclone effect, do not fall towards the deposit 8, are suctioned by the suction device 7 through canals up to an antielectrostatic filter 18 where it falls into a deposit 19 in order to reutilize this powder once again by recirculating it to the deposit 14.

At this point of the process, the screw or threaded rod 3 can arrive with some previous coating since it may be zinc-coated, painted, phosphated, etc., by electrolytic or organometallic processes, etc.

The elements to be treated are placed in a hopper 1 in a correct disposition to be effectively treated, and from here they are transferred to a conveyor belt, said belt is preferably made of two graphited strips of "PTFE". These belts have the particularity to be antielectrostatic in such a way that the electrostatic charge that the screws could store, discharges itself through them, since the heads of the screws lean on the graphited belts. These belts can also be connected to an electronic equipment charged oppositely to the screws and discharging them from their polarisation.

At the same time, as the screws 3 are passing on this conveyor belt 2, they are heated by means of any known system, preferably by induction, to a temperature slightly over the melting point of the plastic powder to be blown on the threaded zone of the screw.

The screws 3 move by means of the conveyor belt 2 and reach its optimal temperature to receive the plastic powder blowing on the threaded surface. In a section of these screws' path, a system of blowing nozzles 21 blows a constant volume of plastic powder suspended in the air towards the hot screw, causing the melting of this plastic material on the selected threaded surface.

In the vicinity of the plastic blowing area, there is a suction collector 6 that collects the plastic material not adhered to the surface of the screw 3 with the intention to reuse it. For this device, there is a powerful vacuum pump as the powerful suction device 7. Underpressure is transmitted through some ducts up to the open end of the collector 6, the suction point of the unused material, close to the jet area. In this area, the powder is pushed by the blower from one side, and, from the other side, is aspirated by the suction device collector 6, in such a way that it is attracted towards said collector, in which transition part of the powder is retained by the hot screw 3, melting it and adhering it to its surface.

The unused powder is aspirated by the collector 6, then it circulates in ducts up to a fork 20, where, because of the cyclone effect, the heaviest particles will fall onto a control valve 9, creating a deposit 8.

The thinnest particles in suspension in the air keep on circulating, attracted by the aspirating powerful suction device 7, until it arrives at an antielectrostatic filter 18.

This antielectrostatic filter 18 can be a net, charged in opposite direction to the charge of the powder suspended in the air, in such a way that, in contact with this powder particles, it causes its discharge.

Here, in this place, it is managed to extract from the fluid the powder quantity that it carries along and to store it in a deposit 19, so that is susceptible to be reutilized mechanically or manually.

On the one hand, this device eliminates the waste, since it practically reutilizes 100 % of the powder not impregnated on the threaded surface of the screw or threaded element and, on the other hand, it keeps the working environment clean, without air pollution that afterwards could have been breathed by persons. This means an important reduction in material consumption and health problems.

As we have already mentioned, there is a major powder quantity that in the already mentioned fork 20 and because of the formed cyclone, falls into a kind of deposit 8 controlled by a valve 9.

At this point, there is a two-valve device 9 and 10 used for the control of the plastic powder advancing towards its utilization and for not destroying the existing underpressure.

When a certain powder quantity is accumulated on said valve 9, this one, manually or mechanically, opens, letting in the powder quantity deposited in the upper deposit 8.

The aforementioned valve 9 closes again, retaining said plastic material locked up between said two valves 9 and 10 or advancing control means, forming a deposit in the container 11. When it is needed, this second valve or control means is provided to be opened, manually or automatically, to let the powder located between said two valves into a container 12 that lets it circulate in small portions up to an endless screw 13 as dragging or driving device for this material. As the powder arrives at this system, it is pushed to the other container 14.

In this container 14 and due to a system that constantly removes the powder that flows up to here, the powder keeps itself loose without forming lumps or clusters, that could slow down the circulation and cause a bad powder distribution on the screw.

From this deposit, the material falls into a small deposit 16 shaped as a hopper, and from here, since the powder doesn't stick together or makes lumps, it continues towards a small chamber 23, or several depending on the system, that is/are crossed by the blower 4 connected to a valve 22 that controls the pressure and volume, preferably of air, provided by any known means like a compressor.

The powder mass introduced in this chamber 23 is kept in movement by means of a mechanism 17, that can be a small motor that transmits the movement by a shaft and some thin blades 24 that can be like wires.

The pressurized air provided and regulated by the valve 22 circulates in the blower 4 opening into a small area 5 where a vacuum is-created, and, by the Venturi effect, carries along the loose powder that is in the chamber 23. A uniform mixing is created along the nozzle 21 that will be adjustable in its longitudinal displacement by means of a device 25 that makes the system tight and in turn allows the spin of the nozzle's free end 21, if an elongated, non-circular opening of the nozzle makes it necessary. Also, this system 25 allows the rapid connection or disengagement of the nozzle.

This nozzle 21 can be made of metallic conductor materials like aluminium, copper, etc., and/or graphited plastic material (polyamide or graphited "PTFE") that are conductive in order to be connected to an electrostatic powder discharge system.

This pressurized air is generated by any known method and its volume is adjustable, so that we can adapt the fluid volume in function of the necessities for each product, maintaining a constant laminar flow during the whole circuit.

Once passed the plastic impregnation section, the screw 3 is cooled, normally by air blowing.

After the application of the self-locking plastic material on the threaded surface of the thread element, it is possible to submit it to a second process like chroming, oiling, lubrication, etc., depending of the characteristics that should be realized in its subsequent use. The powder used throughout the process can be made of thermoplastic resins, polyamides, plastics, "PTFE". In every point of the process, the flow of air only or with powder in suspension will be in laminar regime, namely with constant speed, that can also be variable in function of the necessities of each case.

This process adopts several variables that can be modified in order to adapt the system to each specific case. These variables are: the flow of the pressurized air ejected by the nozzles 4, adjustable by acting on said source of the pressurized air or changing the nozzles 21 in shape, size, number or disposition. Other variable on which it is possible to act is the speed of the conveyor belt 2, which speed will be in function of the temperature that must acquire the threaded rods 3, and of the powder quantity that these must receive. Also it is possible to act on the heating system coupled to the conveyor belt 2 so that the heating intensity is the most opportune.

Each ensemble of blower 4, nozzle 21, chamber 23 and valve of volume and pressure control 22 is independent of each other in a system with more than one blower, namely the number, disposition, fluid volume, shape and size will be in function of the necessities. In each chamber 5 its own underpressure is created on the plastic powder chamber 23, this underpressure can be different to other nozzles of the same system, and therefore, the quantity of blown powder is different, according to the characteristics of the final product, since for this we only need to adjust the volume of the fluid by means of said valve 22.

It is even possible to place each nozzle 21 in a different height, namely the shafts of all the nozzles do not have to coincide in the same horizontal plane in the case in which, for example, the pattern of the coating to impregnate on the thread requires it for its size or disposition.

This system leads to a flexible device as for the coating quantity, size and disposition on the thread, since it is possible to achieve an accumulative effect of the powder when the nozzles are on the same horizontal plane. We can independently disengage or connect each one of them without affecting the other ones by operating on each control valve 22.

Utilizing this device, threaded rods, screws, etc. exempt of electrostatic charge are guaranteed, since the impregnation of the plastic material coating on the thread will be made on a specific point or zone, which provides a uniformity and a guarantee of the self-locking action. Furthermore, the contamination is avoided in the thread, namely, the plastic material will not have points or stain out of the area destined for that scope.

Once the nature of the present invention being sufficiently described, as one way to reduce it to the practice, we only have to add that in its ensemble and the parts that compose it, it is possible to introduce shape, material and disposition changes, provided that said modifications do not change substantially the characteristics of the invention which are defined by the following claims.

## Claims

1. A device for applying a plastic coating on threaded objects, preferably threaded rods, the plastic material being applied in powder form, the device comprising:
- a heating system for the threaded objects,
- a conveyor belt (2),
- a device creating underpressure in the unused material collecting circuit,
- mechanisms that prevent the powder stagnation,
- a collector (6) to take up the excess plastic powder, and
- a system of nozzles (21) and blowers (4) where air exits under pressure, the pressurized air being provided by a device arranged for that purpose,
**characterized in**
**that** it further comprises a series of reservoirs (8, 11, 12) and powder control valves (9, 10) in successive sections and a plastic powder collecting means for the plastic powder carried along by air circulation, that the conveyor belt is an antielectrostatic conveyor belt for eliminating the electric charge of the threaded objects, and that the plastic powder collecting means for plastic powder is an antielectrostatic filter (18) for discharging plastic powder carried to the filter by the air stream and separating and collecting the powder in a second container (19).

2. A device according to claim 1, **characterized in that** the conveyor belts are made of graphited "PTFE", that acts as transmitter of the electrostatic charge created in the threaded objects, to an equipment charged with opposite polarity to the objects, eliminating in this way their charge.

3. A device according to one of claims 1 to 2, **characterized in that** it comprises a powerful suction system, for which the underpressure is created by the device creating underpressure in the unused material collecting circuit, the suction system comprising the antielectrostatic filter (18), the collector (6) in the vicinity of the plastic blowing area (5) in order to aspirate all the powder not adhered to the threaded element, and downstream to the collector, a fork (20) capable of depositing the heavier particles due to the cyclone effect at a first reservoir (8) and expelling the lighter powder following a trajectory up to the antielectrostatic filter (18).

4. A device according to one of claims 1 to 3, **characterized in that** it comprises nozzle-blower arrangements, each comprising a nozzle (21), a blower (4) and preferably a pressure and volume control valve (22), wherein the arrangements are independent from each other, and that at least two nozzle-blower arrangements (4) are present.

5. A device according to one of claims 1 to 4, **characterized in that** the nozzles (21) are orientable and displaceable in height as the size or dispositions of the coating makes it necessary.

6. A device according to one of the claims 1 to 5,
**characterised in that** the conveyor belt comprises one or more belts adjustable in speed.

7. Use of the device according to one of claims 3 to 6,
**characterized in that** that by opening and closing the control valves (9, 10) adequately, the plastic powder collected by the cyclone effect in the fork (20) of the circuit of aspiration, is controlled for its reuse.

8. Use according to claim 7 or of the device according to one of claims 3 to 6, **characterized in that** the antielectrostatic filter (18) is charged with opposite polarity to the powder charge and deposits the fine particles undecanted by the fork (20) and carried along by the flow of the fluid, in a container (19) for reuse of the stored powder within the device.

9. Use according to one of claims 7 to 8 or of the device according to one of claims 1 to 6, **characterized in that** before the powder is blown on the threaded surface of the threaded objects, the plastic powder is kept in movement, namely by motor means or any other known method, in order that in the chambers (5) and depositing locations (14, 16), lumps are prevented and a uniform mixture with the pressurized air is created and is carried along until it hits the hot threaded element.

10. Use according to one of claims 7 to 9 or of the device according to one of claims 1 to 6, **characterized in that** the device has one or more blower-nozzle arrangements independent from each other, and that through each arrangement, an adjustable volume from 0 to 100 % of the pressurized fluid supply, preferably air, is circulated, so that each blower-nozzle arrangement emits its own plastic material powder stream towards the threaded area to be treated.

## Patentansprüche

1. Vorrichtung zum Auftragen einer Kunststoffschicht auf mit Gewinde versehene Gegenstände, insbesondere Gewindestifte, wobei das Kunststoffmaterial pulverförmig aufgetragen wird und die Vorrichtung umfasst:
- ein Beheizungssystem für die mit Gewinde versehenen Gegenstände,
- ein Förderband (2),
- eine Vorrichtung, die im Kreislauf zur Rückgewinnung von unbenutztem Material Unterdruck erzeugt,
- Mechanismen zur Verhinderung von Pulverstagnation,
- eine Auffangvorrichtung (6) zum Einsammeln des überschüssigen Kunststoffpulvers, und
- ein System aus Düsen (21) und Gebläsen (4), aus denen Druckluft austritt, wobei die Druckluft von einer dafür vorgesehenen Vorrichtung erzeugt wird,
**dadurch gekennzeichnet,**
**dass** sie zudem eine Reihe von Behältern (8, 11, 12) und Pulverkontrollventilen (9, 10) in aufeinanderfolgenden Abschnitten enthält sowie ein Mittel zum Auffangen des Kunststoffpulvers, das durch einen Luftstrom gefördert wird; dass das Förderband ein anti-elektrostatisches Förderband ist zur Entfernung von elektrostatischer Ladung der mit Gewinde versehenen Gegenstände; und dass das Mittel zum Auffangen des Kunststoffpulvers ein anti-elektrostatischer Filter (18) ist, um das Kunststoffpulver, das von dem Luftstrom in den Filter gefördert wird, zu entladen, das Pulver zu trennen und in einem zweiten Behälter (19) zu sammeln.

2. Vorrichtung nach Anspruch 1, **dadurch gekennzeichnet, dass** die Förderbänder aus graphitiertem "PTFE" hergestellt sind, das die auf den mit Gewinde versehenen Gegenständen erzeugte elektrostatische Ladung auf eine Ausrüstung überträgt, die mit der entgegengesetzten Polarität der Gegenstände geladen ist, wodurch deren Ladung beseitigt wird.

3. Vorrichtung nach einem der Ansprüche 1 oder 2, **dadurch gekennzeichnet, dass** sie ein leistungsstarkes Aufsaugsystem enthält, dessen Unterdruck von der Vorrichtung erzeugt wird, die den Unterdruck für den Kreislauf zur Rückgewinnung überschüssigen Materials erzeugt, wobei das Aufsaugsystem den anti-elektrostatischen Filter (18), die Auffangvorrichtung (6), die sich in der Nähe des Kunststoffblasbereiches (5) befindet, um das gesamte Pulver, das nicht an den mit einem Gewinde versehenen Gegenständen haftet, aufzusaugen und eine Gabelung (20) stromabwärts der Auffangvorrichtung umfasst, wobei die Gabelung ausgelegt ist, die gewichtigeren Partikel aufgrund der Zyklonwirkung in einen ersten Behälter (8) abzuführen und das leichtere Pulver entlang eines Weges zu dem elektrostatischen Filter (18) auszutreiben.

4. Vorrichtung nach einem der Ansprüche 1 bis 3, **dadurch gekennzeichnet, dass** sie Düsen-Gebläse-Vorrichtungen enthält, die jeweils aus eine Düse (21), ein Gebläse (4) und vorzugsweise ein Druck- und Volumenkontrollventil umfassen, wobei die Vorrichtungen unabhängig voneinander sind und mindestens zwei Düsen-Gebläse-Vorrichtungen (4) vorhanden sind.

5. Vorrichtung nach einem der Ansprüche 1 bis 4, **dadurch gekennzeichnet, dass** die Düsen (21) ausrichtbar und höhenverstellbar sind je nach Notwendigkeit durch Größe oder Anordnungen der Beschichtung.

6. Vorrichtung nach einem der Ansprüche 1 bis 5, **dadurch gekennzeichnet, dass** das Förderband ein oder mehrere Bänder mit verstellbarer Geschwindigkeit umfasst.

7. Gebrauch der Vorrichtung nach einem der Ansprüche 3 bis 6, **dadurch gekennzeichnet, dass** durch entsprechendes Öffnen und Schließen der Kontrollventile (9, 10) das Kunststoffpulver, das durch die Zyklonwirkung in der Gabelung (20) des Aufsaugkreislaufs gesammelt wird, für die Wiederverwendung kontrolliert wird.

8. Gebrauch nach Anspruch 7 oder Gebrauch der Vorrichtung nach einem der Ansprüche 3 bis 6, **dadurch gekennzeichnet, dass** der anti-elektrostatische Filter (18) mit der entgegengesetzten Polarität des Pulvers geladen ist und die feinen Partikel, die nicht von der Gabelung (20) aufgenommen wurden und von dem Luftstrom weitergeleitet werden, in einem Container (19) abgeschieden werden, um das gesammelte Pulver in der Vorrichtung wiederverwenden zu können.

9. Gebrauch nach einem der Ansprüche 7 bis 8 oder Gebrauch der Vorrichtung nach einem der Ansprüche 1 bis 6, **dadurch gekennzeichnet, dass**, bevor das Pulver auf die Gewindeoberfläche der mit einem Gewinde versehenen Gegenstände geblasen wird, das Kunststoffpulver in Bewegung gehalten wird, und zwar auf motorischem Wege oder einer sonstigen, bekannten Methode, so dass Klumpen in den Kammern (5) und den Abscheidungsbereichen (14, 16) vermieden werden und mit der Druckluft eine einheitliche Mischung gebildet und das Pulver bis zum heissen Gewindeelement geführt wird.

10. Gebrauch nach einem der Ansprüche 7 bis 9 oder Gebrauch der Vorrichtung nach einem der Ansprüche 1 bis 6, **dadurch gekennzeichnet, dass** die Vorrichtung eine oder mehrere Gebläse-Düse-Vorrichtungen besitzt, die unabhängig voneinander sind, und dass durch jede dieser Vorrichtungen ein einstellbares Volumen von 0 bis 100% des komprimierten Fluidstromes, vorzugsweise von Luft, fließt, so dass jede Gebläse-Düse-Vorrichtung ihren eigenen Kunststoffmaterialpulverstrom auf den zu behandelnden Gewindebereich abgibt.

## Revendications

1. Dispositif servant à appliquer une couche plastique sur des objets filetés, de préférence des tiges filetées, la matière plastique étant appliquée sous forme de poudre et le dispositif comprenant :
- un système chauffant pour les objets filetés,
- un convoyeur à bande (2),
- un mécanisme générant une sous-pression dans la matière non utilisée du circuit collecteur,
- des mécanismes pour éviter la stagnation de la poudre,
- un collecteur (6) pour recueillir l'excès de poudre plastique et
- un système de buses (21) et de soufflantes (4) où l'air sort sous pression, l'air pressurisé étant fourni par un dispositif prévu à cet effet,
**caractérisé en ce qu'**il comprend en plus une série de réservoirs (8, 11, 12) et d'obturateurs de contrôle de la poudre (9, 10) dans des sections successives et un mécanisme de collecte de la poudre plastique qui est transportée par circulation d'air, **en ce que** le convoyeur est un convoyeur anti-électrostatique destiné à éliminer la charge électrique des objets filetés et **en ce que** le dispositif de collecte de la poudre plastique est un filtre anti-électrostatique (18) prévu pour la décharge de la poudre plastique transportée jusqu'au filtre par le courant d'air et pour la séparation et la collecte de la poudre dans un second conteneur (19).

2. Dispositif suivant la revendication 1, **caractérisé en ce que** les convoyeurs à bande sont en "PTFE" graphité, qui agit en tant que transmetteur de la charge électrostatique générée dans les objets filetés vers un équipement chargé avec une polarité opposée à celle des objets, éliminant ainsi leur charge.

3. Dispositif suivant l'une quelconque des revendications 1 à 2, **caractérisé en ce qu'**il comprend un système de succion puissant qui utilise la sous-pression générée par le dispositif qui la génère dans le circuit collecteur de la matière non utilisée ; le système de succion comprenant le filtre anti-électrostatique (18), le collecteur (6) à proximité de la zone de soufflage du plastique (5) en vue d'aspirer toute la poudre non collée à l'élément fileté et en aval du collecteur, une fourchette (20) permettant de déposer les particules plus lourdes dues à l'effet cyclone dans un premier réservoir (8) et d'expulser la poudre plus légère suivant une trajectoire menant au filtre anti-électrostatique (18).

4. Dispositif suivant l'une quelconque des revendications 1 à 3, **caractérisé en ce qu'**il comprend des mécanismes de buse-soufflante, chacun comprenant une buse (21), une soufflante (4) et, de préférence, un obturateur de contrôle de la pression et du volume, dans lequel les mécanismes sont indépendants les uns des autres, et **en ce qu'**il existe au moins deux mécanismes de buse-soufflante (4).

5. Dispositif suivant l'une quelconque des revendications 1 à 4, **caractérisé en ce que** les buses (21) sont orientables et déplaçables en hauteur dans la mesure où l'épaisseur ou la disposition de la couche rendent nécessaires ces réglages.

6. Dispositif suivant l'une quelconque des revendications 1 à 5, **caractérisé en ce que** le convoyeur comprend une ou plusieurs bandes dont la vitesse est réglable.

7. Utilisation du dispositif suivant l'une quelconque des revendications 3 à 6, **caractérisé en ce que** l'ouverture et la fermeture adéquates des obturateurs (9, 10) permettent le contrôle de la poudre plastique recueillie par l'effet cyclone dans la fourchette (20) du circuit d'aspiration en vue de sa réutilisation.

8. Utilisation suivant la revendication 7 ou du dispositif suivant l'une quelconque des revendications 3 à 6, **caractérisé en ce que** le filtre anti-électrostatique (18) est chargé avec une polarité opposée à celle de la charge de la poudre et dépose les particules fines non décantées par la fourchette (20) et transportées par circulation du fluide dans un conteneur (19) en vue de la réutilisation de la poudre stockée dans le dispositif.

9. Utilisation suivant l'une quelconque des revendications 7 à 8 ou du dispositif suivant l'une quelconque des revendications 1 à 6, **caractérisé en ce que**, avant que la poudre soit soufflée sur la surface des objets filetés, la poudre plastique est remuée, soit par un dispositif motorisé soit par toute autre méthode connue, afin d'éviter la formation de grumeaux dans les cuves (5) et dans les zones de dépôt (14, 16), et afin de produire un mélange uniforme avec l'air pressurisé et de le transporter jusqu'à ce qu'il s'applique sur l'élément fileté chaud.

10. Utilisation suivant l'une quelconque des revendications 7 à 9 ou du dispositif suivant l'une quelconque des revendications 1 à 6, **caractérisé en ce que** le dispositif possède un ou plusieurs mécanismes de buse-soufflante indépendants les uns des autres et **en ce que**, à travers chacun de ces mécanismes, il met en circulation un volume ajustable de 0 à 100 % du fluide pressurisé apporté, de préférence de l'air, de sorte que chaque mécanisme de buse-souffiante projette son propre courant de poudre plastique sur la zone filetée à traiter.
